**Europäisches Patentamt**

**European Patent Office**

**Office européen des brevets**

(19)

(11) Publication number: **0 051 489**
**A1**

(12) # EUROPEAN PATENT APPLICATION

(21) Application number: **81305220.6**

(22) Date of filing: **03.11.81**

(51) Int. Cl.³: **F 16 K 31/08**

(30) Priority: **05.11.80 GB 8035517**

(43) Date of publication of application:
**12.05.82 Bulletin 82/19**

(84) Designated Contracting States:
**DE FR GB IT NL**

(71) Applicant: **AGA NAVIGATION AIDS LIMITED**
**Beacon Works**
**Brentford Middlesex TW8 0AB(GB)**

(72) Inventor: **Bryenton, Ronald William**
**29 High Beeches**
**Banstead Surrey SM7 1NG(GB)**

(72) Inventor: **Parkins, James Robert**
**41 Rowan Road**
**Brentford Middlesex(GB)**

(74) Representative: **Wisher, Michael Frederick et al,**
**Urquhart-Dykes & Lord 47 Marylebone Lane**
**London W1M 6DL(GB)**

(54) A fluid valve.

(57) A bistable gas valve includes a housing (2) having a gas passage (4) therethrough leading to a gas beacon. A support member (10) is parallel to the housing (2), and an operating member (16) is pivotally mounted to pivot between a stable condition in which the passage entrance (6) is open, and a stable condition in which the entrance (6) is closed. Two coils (26) and (28), centre-tapped at the point (30), are wound round the housing (2) and support member (10) respectively. The region around the housing (2) and support member (10) is enclosed, and gas is fed to the enclosure from a pressurised gas source. A permanent magnet (22) biasses the operating member (16) into either one of the aforementioned stable conditions thereby either opening or closing the passage entrance (6).

If the passage entrance (6) is open then gas passes through the passage to the beacon lamp. To switch off the lamp an electric pulse is fed to the coils (26) and (28) to pivot the member (16) to its other stable condition thereby closing the passage entrance (6).

The pulses for causing the operating member (16) to pivot are produced by a pulse generator. If the beacon is used as a sun switch the pulse generator may be actuated by an output signal from a solar array. If the beacon is used as a flasher, then the pulse generator is actuated by operational characters admitted from a character store in response to an address counter.

FIG.1

TITLE

"A Fluid Valve"

DESCRIPTION

The present invention relates to a fluid valve, and to a system for operating the fluid valve.

By "fluid valve" is meant a valve which is operable to take up either an open position in which it allows the passage of a fluid through the valve, and a closed position in which it shuts off the fluid flow. In this Specification the term "fluid" covers a gas, a liquid or a gas-liquid mixture.

The present invention is particularly concerned with a valve and an operating system for controlling the gas supply to a gas beacon. One application of a gas beacon is in marine lighting and signalling where the beacon may be used to mark a desired navigational passage or to indicate a hazard to shipping in the area.

Usually it is preferable for the beacon to be switched off in the daytime, and in many marine installations it is desirable for the beacon to transmit or flash a code identifying the particular beacon. Because of the location of the marine beacons it is frequently impracticable for the beacons to be energised from a mains supply, and it is necessary to energise a beacon valve switching system by a storage battery located on site. It will be appreciated that the power consumption of the beacon valve switching system is a critical factor in the working duration of the beacon, and it is an aim of the invention to reduce the power consumption of a beacon valve switching system.

According to one aspect of the invention there is provided a bistable fluid valve as hereinbefore defined comprising a housing containing an entrance to a fluid passage, an operating member movable between a first stable condition in which it closes the passage entrance and a second stable condition in which it leaves open the passage entrance, magnetic means to bias the operating member into either one of said conditions, and a pulse circuit arranged so that a pulse generated therein produces a magnetic field to change the operating member to the other of said conditions in which it is held by the said magnetic means.

Stop means may be provided to define the distance between the operating member and the passage entrance at the second stable condition.

The fluid valve may include adjustment means to adjust the distance between the operating member and the passage entrance. This operating member may be pivotally movable between the two stable conditions, and the housing and stop means are then located on opposite sides of the pivotal mounting adjacent to respective ends of the operating member. The pulse circuit includes two electrically opposed coils which are wound round the housing and the stop means respectively.

According to another aspect of the invention there is provided a valve operating system comprising a solar array to produce an output signal in response to light incident thereon, a pulse generator actuated by said output signal to produce a valve operating pulse, a detector circuit responsive to movement of the valve to reset the pulse generator on operation of the valve, and a battery chargeable by the solar array to provide power for the system.

If desired, the system may be arranged to operate the valve in a preselected manner. This modified system further includes a character store responsive to an address counter to emit operational characters in a preselected sequence. These characters may actuate the pulse generator to produce said valve operating pulses in a required sequence to provide the aforementioned control of the valve.

The address counter cycles or scans the character store at a preselected frequency causing desired ones of the stored characters to be emitted in sequence. The system can be arranged so that power is supplied to the character store only when it is required to emit a stored character. The character store may emit a synchronising pulse to reset the address counter back to the start position when the required characters have been emitted from the store. The system may include a monitor circuit which ensures that the valve remains closed if the required character is not emitted from the character store.

The invention will now be particularly described by way of example with reference to the accompanying illustrative drawings in which:-

FIGURE 1 is a side elevation of one bistable gas valve of the invention;

FIGURE 2 is a side elevation of an electronic sun valve including the gas valve of Figure 1;

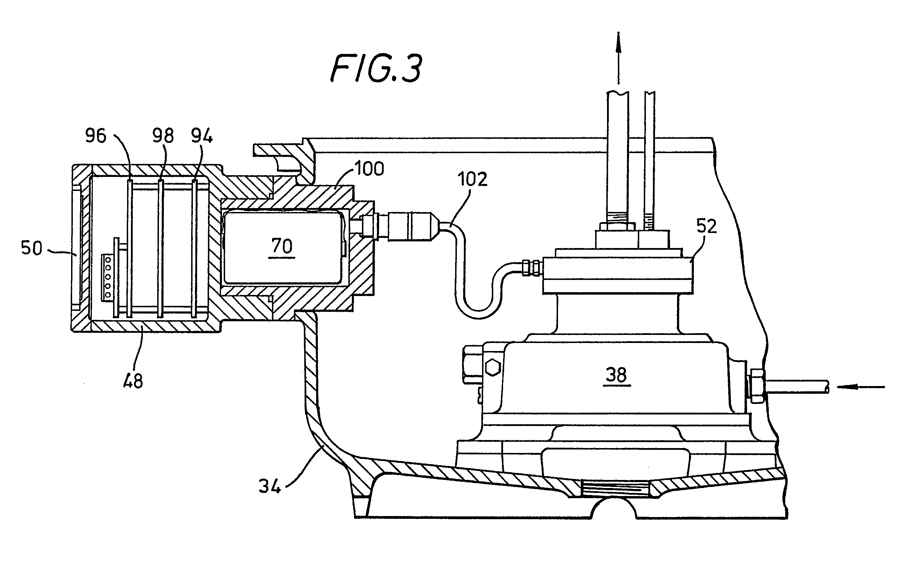

FIGURE 3 is a side elevation of an electronic flasher valve; and

FIGURE 4 is a diagrammatic circuit diagram of a gas valve which can be used as either a sun valve or as a flasher valve.

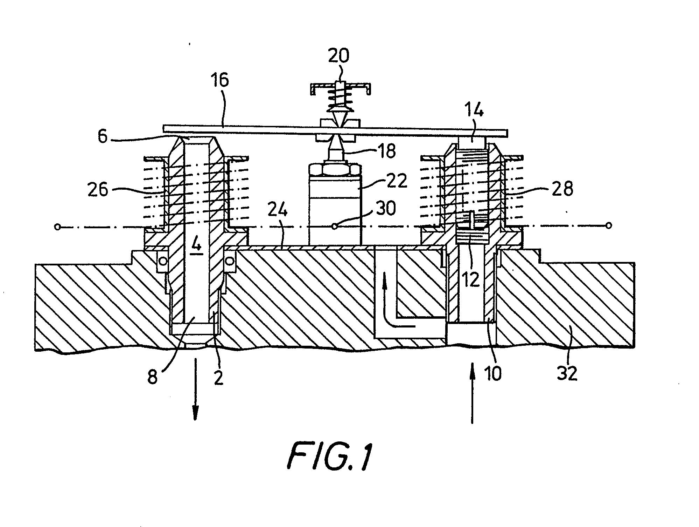

Referring to Figure 1, one bistable gas valve of the invention includes a housing 2 having a gas passage 4 extending longitudinally through it from an entrance 6 to an exit 8 leading to a marine gas beacon. A support member 10 is parallel to and spaced from the housing 2; this support member 10 having a threaded passage 12 extending longitudinally along it. A stop screw 14 is screwed into the passage 12 to protrude slightly from the passage entrance, this stop screw 14 being recessed at its lower face to receive a screw driver. An elongate operating member 16 is pivotally mounted on a pivot support 18 so as to pivot between the stable condition illustrated in Figure 1 in which the passage entrance 6 is open, and the stable condition in which the passage entrance 6 is closed. The balance of the operating member 16 can be adjusted by a spring biassed adjustment pin 20. The pivot support 18 is mounted on a permanent magnet 22 which is mounted with the housing 2 and support member 10 on an armature plate 24.

Two coils 26 and 28 are arranged around the housing 2, and the support member 10 respectively; these coils being centre tapped at the point 30. The region above the armature plate 24 is enclosed; gas is fed to the enclosure through the support block 32 via a gas regulator downstream of a pressurised gas source. The magnetic bias from the permanent magnet 22 biasses the operating member 16 into either one of the aforementioned stable conditions thereby either opening the passage entrance 6 as illustrated or closing the passage entrance 6 and being spaced from the stop screw 14.

In operation, if for example, the passage entrance 6 is open, then gas can pass from the regulator through the passage 6 to the marine beacon lamp. When it is desired to switch off the lamp, an electric pulse of the appropriate polarity is fed to the coils 26 and 28 which are wound so that when energised their flux opposes the permanent magnet flux in the closed loop of the coil 28 and is additive to the flux in the coil 26. This flux from the energised coils causes the operating member 16 to pivot to its other stable condition thereby closing the passage entrance 6 and cutting off the gas supply to the beacon lamp. The material of the components within the magnetic flux circuits are of low coercivity.

The length of stroke of each end of the operating member 16 between its two end positions is approximately 0.1 mm. To reduce power consumption, the pulse length is terminated by a sensing circuit which is connected to the sensor tap 30 of the coils 26 and 28. This sensing circuit detects a small variation in the rate of coil current increase which is caused by an end of the operating member 16 making contact with either the housing 2 or the support member 10 at the end of its stroke. By using this technique it is possible to reduce the width or duration of a typical operating pulse to approximately 1.5 milliseconds. By using CMOS (complementary metal oxide symmetry) integrated circuitry for the control circuitry it is possible to reduce power consumption to an absolute minimum. This enables a small solar charged battery to provide an adequate service-free power source having a battery life of from 8 to 10 years.

- 6 -

0051489

A basic form of the control circuitry to the coils 26 and 28 is what is known as a "sun switch" which switches off the beacon lamp during the daytime in response to the light intensity on the solar array. If an appropriate oscillator and character generator are incorporated into the valve control circuits then the valve can be made to operate to provide coded ON-OFF sequences so that the marine beacon acts as a light flasher emitting its characteristic coding signals.

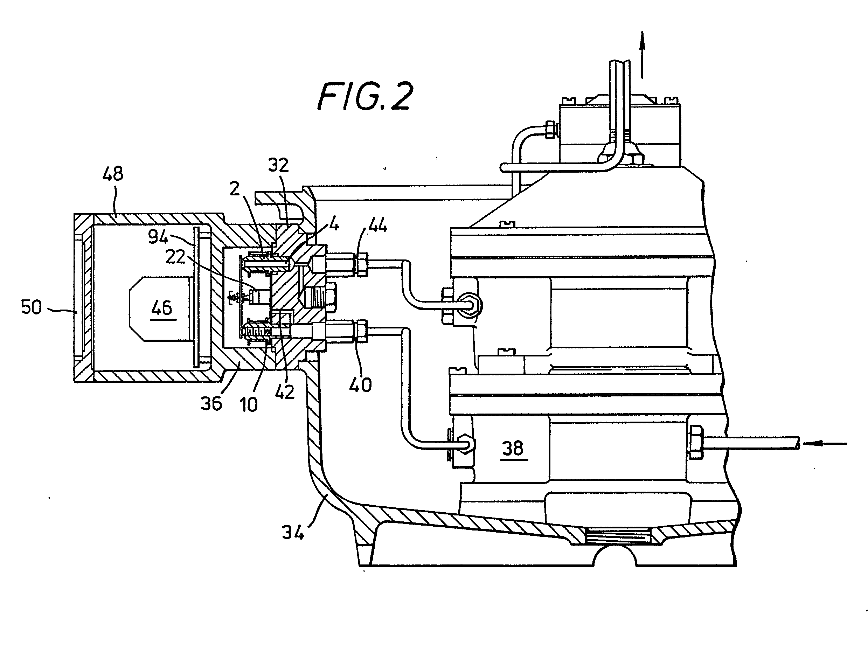

Referring to Figure 2, an electronic sun valve assembly includes the gas valve of Figure 1, and for clarity corresponding components will be given the same reference numerals.

The valve housing 2, the support member 10 and the permanent magnet 22 are mounted on a support block 32 which is itself mounted on a base 34 of the beacon lantern. A casing 36 is mounted on the support block 32 enclosing the valve of Figure 1. Gas from a regulator 38 passes through passages 40 and 42 to the valve regulator enclosure. When the gas valve is in the open position as illustrated this gas then passes through the passages 4 and 44 to the beacon lamp. A 6 volt solar battery 46 is housed in the printed circuit board housing 48 mounted in the casing 36. A solar panel 50 forms the top of this housing 48 thereby charging the battery 46 in response to sunlight incident thereon.

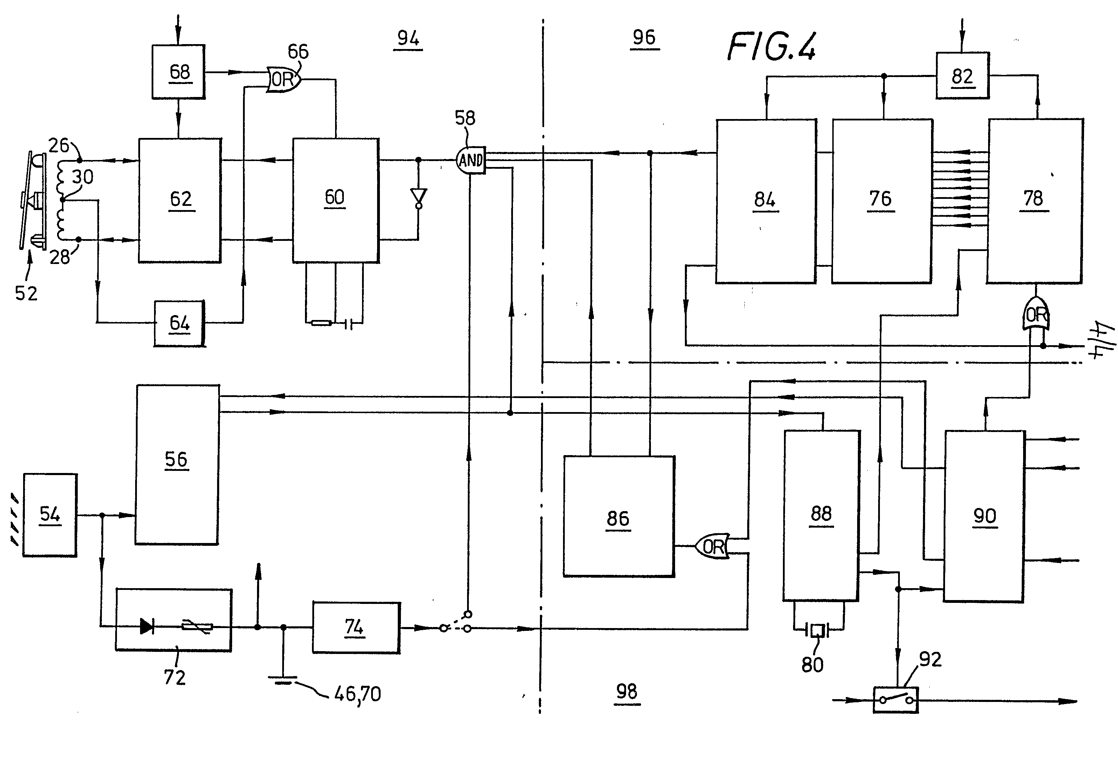

Referring to Figure 4, the gas valve 52 of Figure 1 can be operated either as a sun valve to come on when the light intensity is below a preselected level i.e. for example, at night time or in overcast daylight weather conditions, or as a flasher to emit one or more identifying codes characteristic of the particular marine beacon.

To operate the valve 52 as a sun valve, the output voltage from a solar array 54 is monitored by a voltage sensing schmitt trigger 56. The solar array 54 provides a current of 36 milliamps at 6 volts, and the trigger 56 is arranged to provide an output signal which changes with an ambient light level in the range of from 100 to 200 lux. A small time delay is incorporated to prevent false operation of the trigger 56 in response to lightening or fluorescent lamps. The light change signal from the trigger 56 is coupled by an AND gate 58 to a monostable timer 60 having output terminals Q1 and Q2. The timer 60 is operable to produce an output pulse of 10 milliseconds duration at the output terminals Q1 or Q2 depending on whether the light level is rising or falling. The terminals Q1 and Q2 are connected to a transistor bridge circuit 62 which includes the centre tapped coils 26 and 28 of the valve 52. If the incident light level is falling, then the pulse from the output Q2 actuates the transistor bridge circuit 62 to pass a current through the coils 26 and 28 in a direction to open the valve 52 thereby allowing gas to pass to the beacon flasher. Similarly, if the light level is rising then an output pulse from the terminal Q1 causes current to be passed through the coils 26 and 28 in a direction to close the valve 52. The pulses produced on the terminals Q1 and Q2 are 10 milliseconds duration. In order to reduce the power consumption, this 10 millisecond pulse is terminated as soon as the valve 52 has completed its change between the open and closed conditions. This is done by means of a detector circuit 64 which detects a small "change" in the rate of current increase of the coils 26 and 28 caused by one end of the valve operating member 16 making contact with either the housing 2 or the support member 10 at the end of its stroke. On detecting this change, the detector circuit 64 passes a signal to one input of an OR gate 66 to reset the monostable timer 60 so as to terminate the pulse on the appropriate terminal Q1 or Q2. This detection system prevents excessive power consumption and at the same time allows for variation in the operating time of the valve 52 due to changes in the operating gas pressure or to deposits forming on the faces of the valve 52.

If a fault occurs in the connection between the valve 52 and the electronic circuitry, then a short circuit detector 68 passes a signal to another input of the OR gate 66 to switch off the monostable timer 60 thereby preventing damage to the transistor bridge circuit 62.

The power source of the system is a nickelcadmium button cell 6 volt battery 70 which is charged by the solar array 54. A charge protect circuit 72 controls the rate of charge in accordance with the ambient temperature and the capacity of the battery 70.

If the solar array 54 becomes faulty or obscured then the battery 70 may become discharged. If this occurred then the valve 52 could not be operated and the beacon light could not be switched on when required i.e. at night time. To prevent this happening, if the level of battery charge falls below a preselected level then a sensor 74 operates the monostable timer 60 to open the valve 52 thereby keeping the beacon light on continuously. This provides a visual warning that something is wrong and ensures that the beacon is inspected and serviced immediately.

The aforementioned circuit operates the valve 52 as a "sun valve" i.e. to ensure that the beacon light is off during the day time and on during the night time. The following circuit components when operated with the aforementioned circuitry control the valve 52 to act as a "flasher" thereby causing the beacon light to emit one or more identifyingcode signals in a required sequence.

Electronic operated gas flasher description:-
Figure 3.

The valve 52 is fitted with a gas jet and pilot burner mounted on a regulator 38 fitted in the lantern base 34. The jet flame is at the focus of the beacon lens.

Control of the valve 52 is via an electric signal cable connected by a plug and socket 102.

The housing 48 contains the control circuitry printed circuit boards i.e. coder board 96, control board 98, and sunvalve board 94. The circuit descriptions of these are indicated in Figure 4; relevant circuit descriptions are indicated by dotted line sections with the appropriate numbers.

The extra functions of the flasher circuitry require a larger battery capacity 70 which is contained in housing 100.

The character signals that will provide the required beacon code are stored in a read-only memory (ROM) circuit 76 which is operated by an address counter 78. A crystal oscillator 80 provides an accurate clockpulse which is passed to the address counter 78. On receiving this clockpulse, the address counter 78 causes the ROM circuit 76 to emit its stored characters in sequence to the AND gate 58. The ROM circuit 76 also emits a synchronising pulse to reset the address counter 78 to the start position when a preselected number of characters have been emitted from the circuit 76. If desired, this synchronising pulse can also be sent to another flasher unit to enable the two beacons to transmit their character codes simultaneously. The normal cycle duration of the address counter 78 is 25.6 seconds, but by resetting with the synchronising pulse it is possible to obtain any required repeating cycle duration such as for example 10 seconds.

The ROM circuit 76 is a nichrome link bipolar type and normally would require a supply current of 0.1 amps. In this system power is applied to the ROM circuit 76 from the address counter 78 through a power saving circuit 82 only when it is required to read the output of the ROM circuit 76 thereby reducing the required power to only a few tens of a microamp.

The emitted characters from the ROM circuit 76 are monitored by a character check circuit 86 which is coupled to the AND gate 58. One input of the AND gate 58 is controlled by the daylight sensor circuit 56 to turn off the beacon light during day light. The second input of the AND gate 58 is controlled by the output of the latch circuit 84 to receive the emitted characters, and the third input of the AND gate 58 is controlled by the character check circuit 86 which checks for accuracy the characters from the ROM circuit 76. If the characters emitted from the ROM circuit 76 are incorrect in any way then the character check circuit 86 switches off the AND gate 58 to close the gas valve 52 to prevent excessive gas loss or damage due to overheating.

When the characters are emitted correctly from the ROM circuit 76 during night time then the AND gate 58 is switched on and the gas valve 52 is operated in response to the emitted characters to cause the beacon light to emit its appropriate sequence of identifying codes.

Remote Operation:-

A V.H.F. receiver and tone decoder may be fitted into a slightly larger housing 48.

Maintain lower power consumption the V.H.F. receiver is periodically switched on by the power switch 92.

The listen duration of .2 seconds every hour is derived from the crystal oscillator 80 and the control period counter 88.

Two modes of operation are possible.

A first mode provides for a daytime test facility where a local servicing vessel may transmit an audio tone which the receiver decodes and applies to the day test input of the command checking circuit 90.

If the tone is correct, then the test output of circuit 90 will force the daylight sensor 56 into the night time mode which turns on the beacon light.

A second mode of operation provides for syncronisation of the emitted flasher character from multiple beacon lights, by transmitting from a shore based transmitter a day tester tone followed by a character syncronising tone.

If the sink input tone is received correctly by the checking circuit 90 then the address counter 78 will be reset to zero, causing the character ROM circuit 76 to start at the beginning of the next character period.

In addition a third tone may be transmitted to turn off the beacon light for port security or gas saving at remote ports.

The light off command is applied to the character check circuit 86 which inhibits the AND gate 58 thereby preventing the character sources emitted by ROM circuit 76 activating gas valve mechanism 52.

Commands may be repeated every hour as required.

Referring to Figure 4, the latch circuit 84 receives the characters emitted from the ROM circuit 76 and passes on these characters to the AND gate 58.

With reference to the sun valve assembly, an alternative to the solar charged power supply is a Lithium Primary Battery.

The solar panel is replaced by a cover plate with a small adjustable aperture. This allows the light level threshold to be adjusted, and the light level is detected by an L.D.R. (LightDependent Resistor).

- 13 -

CLAIMS

1.    A bistable fluid valve as hereinbefore defined comprising a housing containing an entrance to a fluid passage, an operating member movable between a first stable condition in which it closes the passage entrance and a second stable condition in which it leaves open the passage entrance, magnetic means to bias the operating member into either one of said conditions, and a pulse circuit arranged so that a pulse generated therein produces a magnetic field to change the operating member to the other of said conditions in which it is held by the said magnetic means.

2.    A fluid valve is claimed in Claim 1, including stop means to define the distance between the operating member and the passage entrance at the second stable condition.

3.    A fluid valve as claimed in Claim 1 or Claim 2, including adjustment means to adjust the distance between the operating member and the passage entrance.

4.    A fluid valve as claimed in Claim 2 or Claim 3, in which the operating member is pivotally movable between the two stable conditions.

5.    A fluid valve as claimed in Claim 4, in which the housing and stop means are located on opposite sides of the pivotal mounting adjacent to respective ends of the operating member.

6.   A fluid valve as claimed in any one of Claims 2 to
5, in which the pulse circuit includes two electrically
opposed coils wound around the housing and the stop
means respectively.

7.   A valve operating system comprising a solar array to
produce an output signal in response to light incident
thereon, a pulse generator actuated by said output
signal to produce a valve operating pulse, a detector
circuit responsive to movement of the valve to reset the
pulse generator on operation of the valve, and a battery
chargeable by the solar array to provide power for the
system.

8.   A valve operating system comprising a character store
responsive to an address counter to emit operational
characters in a preselected sequence, a pulse generator
actuated by said operational characters to produce a
valve operating pulse, and a detector circuit responsive
to movement of the valve to reset the pulse generator on
operation of the valve.

9.   A system as claimed in Claim 8, in which the address
counter cycles or scans the character store at a preselected frequency causing desired ones of the stored
characters to be emitted in sequence.

10.   A system as claimed in Claim 8 or Claim 9, in which
power is supplied to the character store only when it is
required to emit a stored character.

11.   A system as claimed in any one of Claims 8 to 10,
in which the character store emits a synchronising pulse
to reset the address counter back to the start position
when the required characters have been emitted from the
store.

12.  A system as claimed in any one of Claims 8 to 11, including a monitor circuit to ensure that the valve remains closed if the required character is not emitted from the character store.

FIG.1

FIG.2

0051489

FIG.3

FIG.4

94    96    98

G051489

0051489

## European Patent Office

## EUROPEAN SEARCH REPORT

Application number
EP 81 30 5220

| | DOCUMENTS CONSIDERED TO BE RELEVANT | | CLASSIFICATION OF THE APPLICATION (Int. Cl. ³) |
|---|---|---|---|

| Category | Citation of document with indication, where appropriate, of relevant passages | Relevant to claim | |
|---|---|---|---|
| X | <u>US - A - 4 004 258</u> (KURT ANRNOLD) | | F 16 K 31/08 |
| | * column 3, line 9 - column 4, line 56 * | 1 | |
| | -- | | |
| X | <u>US - A - 3 814 376</u> (REINICKE) | | |
| | * column 1, line 54 - column 2, line 41 * | 1 | |
| | -- | | |
| X | <u>DE - C - 665 565</u> (STOTZ) | | TECHNICAL FIELDS SEARCHED (Int.Cl. ³) |
| | * column 1, line 54 - column 2, line 41 * | 1 | F 16 K 31/00 G 08 G 3/00 |
| | -- | | |
| | <u>FR - A - 2 287 014</u> (BICO SA.) | | |
| | * the whole document * | 1,7 | |
| | ---- | | |

CATEGORY OF CITED DOCUMENTS

X: particularly relevant if taken alone
Y: particularly relevant if combined with another document of the same category
A: technological background
O: non-written disclosure
P: intermediate document
T: theory or principle underlying the invention
E: earlier patent document. but published on. or after the filing date
D: document cited in the application
L: document cited for other reasons

&: member of the same patent family.
corresponding document

| | The present search report has been drawn up for all claims | | |
|---|---|---|---|
| Place of search | Date of completion of the search | Examiner | |
| The Hague | 25-01-1982 | VERELST | |

EPO Form 1503.1   06.78